# EUROPÄISCHE PATENTSCHRIFT

(11) **EP 0 561 229 B1**
(45) Veröffentlichungstag und Bekanntmachung des Hinweises auf die Patenterteilung: **01.10.1997**
(21) Anmeldenummer: 93103443.3
(22) Anmeldetag: 04.03.1993
(51) Int. Cl.: G01V 1/38, G01V 1/20

(54) **Marineseismischer Streamer mit einer Vorrichtung zur Bedämpfung von Schwingungen**
Seismic streamer with vibration damping arrangement
Flûte sismique muni d'un dispositif pour l'atténuation des vibrations

(30) Priorität: 14.03.1992 DE 4208178
(43) Veröffentlichungstag der Anmeldung: 22.09.1993
(73) Patentinhaber: Prakla-Seismos GmbH, 30655 Hannover (DE)
(72) Erfinder: Weichert, Helmut, Dr. Dipl.-Phys., W-3000 Hannover 91 (DE); Technau, Manfred, Dipl.-Ing., W-3014 Laatzen (DE); Laake, Andreas, Dr. Dipl.-Phys., W-3000 Hannover (DE)
(74) Vertreter: Meyer, Ludgerus A., Dipl.-Ing.

(56) Entgegenhaltungen:
- EP-A- 0 171 936
- DE-A- 2 941 028
- GB-A- 2 202 946
- US-A- H 387

## Beschreibung

Die Erfindung betrifft einen marineseismischen Streamer nach dem Oberbegriff des Anspruchs 1.

Bei marineseismischen Untersuchungen werden seismische Signale beispielsweise durch hinter einem Meßschiff geschleppte Luftpulser oder Sprengladungen erzeugt. Seemeßkabel, sogenannte Streamer, dienen zur Schallsignalaufnahme im Wasserkörper. Im Streamer sind auf Druckänderungen reagierende Meßzellen, sogenannte Hydrophone, angeordnet, die die seismischen Reflexionssignale aus dem tieferen Untergrund registrieren.

Derartige Streamer werden üblicherweise vom Meßschiff geschleppt, wobei das Meßkabel meist aus mehreren durch Schnellkupplungen mechanisch und elektrisch verbundenen Sektionen besteht. Die Gesamtlänge eines Streamers kann mehre Kilometer betragen. Die am Streamer wirkende Zugkraft wird mit Zuqseilen, beispielsweise Stahlseilen, von Schnellkupplung zu Schnellkupplung übertragen. Zur Einhaltung des Abstandes der Zugseile und zur Bildung einer Querstabilität des Streamers sind in Längsrichtung beabstandete Formstücke vorgesehen. Diese Anordnung bildet ein Skelett, das die am Streamer wirkenden Kräfte aufnimmt. Das Skelett wird zum Schutz gegen Seewasser in einen Schlauch eingezogen. Zur Erleichterung dieses Vorgangs weisen die Formstücke allgemein einen Außendurchmesser auf, der geringfügig kleiner als der Innendurchmesser des nicht geschleppten Schlauches ist.

Zwischen den Formstücken sind die Hydrophone angeordnet, deren Verkabelung durch Bohrungen in den Formstücken geführt ist. Um die Dichte des Streamers der Dichte des Seewassers anzugleichen, ist der Streamer mit Flüssigkeit, insbesondere Öl, gefüllt.

Damit der Schlauch mit Flüssigkeit befüllt werden kann, ist eine durchgehende Flüssigkeitssäule im Schlauch nötig.

Die Formstücke weisen auch meistens eine in Längsrichtung angeordnete Bohrung großer Durchgangsweite auf, so daß die Ölfüllung im Streamer weitgehend frei fließen kann. Nachteilig ist dabei, daß das Öl sich aber auch während der Meßfahrt in jeder einzelnen Streamersektion im wesentlichen ungehindert bewegen kann. Bei longitudinalen Schwingungen des Streamers während einer Meßfahrt, beispielsweise bei Resonanzen, ausgelöst von Schiffswellendrehzahl oder Seegangsschwingungen, wird daher die im Streamer eingeschlossene Ölsäule relativ zum Skelett bewegt. An den Enden der Ölsäule, beispielsweise an den Kupplungen der einzelnen Streamersektionen, wird der ungestörte am Aufnahmeort herrschende Druck abwechselnd erhöht und vermindert. Diese Relativbewegung wird in Druckwellen umgesetzt. Die Druckwellen sind akustische Störsignale, die die seismischen Nutzsignale verfälschen bzw. überdecken.

Aus der EP 171 936 ist ein marineseismischer Streamer mit einem flüssigkeitsbefüllten Schlauch bekannt, bei dem in Längsrichtung Zugseile, untereinander in Längsrichtung beabstandete Formstücke, Abstandstücke und Hydrophone sowie strömungsbehindernde Öffnungen in den Formstücken zur abschnittsweisen Teilung des Streamers vorgesehen sind.

Die Größe der in den Formstücken verwendeten Öffnungen erlaubt nur einen sehr langsamen Druckausgleich zwischen den Sektionen. Da der Außendurchmesser der Formstücke dem Innendurchmesser des Schlauches voll entspricht, erhält der Schlauch unter Zugkraft Einschnürungen zwischen jeweils zwei Formstücken, so daß sich im Betrieb insgesamt eine wellige äußere Gestalt des Schlauches ergibt.

Die DE 29 41 028 A1 zeigt einen Streamer mit einem zusätzlichen Innenschlauch, in dem über eine Verankerung in offenporigen Schaumstoffhaltem Hydrophone aufgenommen sind. Der Innenschlauch ist seinerseits über Abstandshalter, die aus Polyäthylen bestehen, im Außenschlauch zentriert. Der Aufbau dieses Streamers ist sehr aufwendig, insbesondere wenn die Leitungsführung der Hydrophone betrachtet wird, die jeweils durch die Wand des Innenschlauches in den Außenschlauch geführt sind. Ein Austausch von Hydrophonen ist daher nur unter nicht zu vertretendem Aufwand möglich.

Durch die Verwendung zweier koaxialer Schläuche treten außerdem Differentialschwingungen auf, die nur durch aufwendige Maßnahmen beseitigt werden können.

In der GB-A-2 202 946 ist ein Streamer angegeben, der mit die Flüssigkeit im Streamer vollständig sperrenden Blockierungsstücken sowie mit weiteren die Flüssigkeit durchlassenden Abstandstücken versehen ist. Die auf diese Weise in sich abgeschlossenen Flüssigkeitskammern wirken im Fall von Beschleunigungen und auch bei Wechsel von Belastungen des Streamers als federähnliche Energiespeicher. Zur Bedämpfung von Störschwingungen ist daher vorgesehen, die Blockierungsstücke entlang dem Streamer ungleichmäßig zu verteilen.

Schließlich ist in der US-H-387 ein Streamer angegeben, bei dem die Hydrophone in einem Gehäuse mit einer Füllung aus elastischem Material eingebettet sind, wobei das Gehäuse seinerseits in einen den Streamer auffüllenden weichen Urethanschaumstoff eingesetzt ist, der als Auftriebsmaterial dient.

Daher ist es Aufgabe der Erfindung, bei einem marineseismischen Streamer die durch Strömungsbewegung der Streamerflüssigkeitsfüllung induzierten Störsignale auf einfache Weise zu reduzieren, ohne daß sich Störungen der Struktur des Streamers ergeben.

Die Erfindung ist im Patentanspruch 1 gekennzeichnet.

Dadurch dass die Formstücke mit strömungsbehindernden Vorrichtungen in Form von ringförmigen Dichtungen versehen sind, deren äußerer Durchmesser dem Innendurchmesser des Schlauches entspricht, wird eine strömungsbehindernde Abdichtung des Ringraumes zwischen Formstück und Schlauch erreicht. Durch den begrenzt offengehaltenen Ringspalt und die Teildurchlässigkeit der Vorrichtung können nur langperiodische Ausgleichsströmungen der Streamerflüssigkeit stattfinden. Das Befüllen, Entleeren oder der Ölwechsel des Streamers bleibt jedoch möglich. Unter starker Zugbelastung reduziert sich der Durchmesser des Schlauches soweit, daß die Spaltbreite gegen Null geht und sich damit die Wirkung der Strömungsbehinderung noch erhöht.

Die Formstücke können vorteilhaft in der Weise konstruiert sein, daß sie dreiteilig aus einem Mittelteil und zwei identischen Kopfteilen gebildet sind. Ein symmetrischer Aufbau der Formstücke erlaubt eine kostengünstige Herstellung und Montage. Bei derartigen Formstücken werden die ringförmigen Dichtungen zwischen dem Mittelteil und den Kopfteilen angeordnet. Vorteilhaft werden die Dichtungen zwischen den Bauteilen eingeklemmt, so daß die Dichtungen beim Einziehen des aus Formstücken und Zugseilen bestehenden Skeletts in den Schlauch am Formstück fixiert sind. Für einteilig ausgebildete Formstücke ist alternativ vorgesehen, daß die ringförmigen Dichtungen in äußeren Ringnuten am Formstück angeordnet sind.

Bei einem zweiteiligen Formstück ist die Dichtung zwischen den beiden Teilen eingefügt.

Das Hydrophon wird vor mechanischen Beschädigungen geschützt, wenn es im Inneren eines Formstücks angeordnet ist.

Wenn das Hydrophon in einer in Längsrichtung angeordneten Durchgangsbohrung des Formstücks, vorzugsweise mit einer hülsenförmigen Dichtung, eingesetzt ist, wird das Hydrophon in einer definierten Lage gehalten. Es kann sich weder in radialer noch axialer Richtung relativ zum Schlauch des Streamers bewegen. Damit können durch Schwingungen des Hydrophons relativ zum Formstück oder Schlauch hervorgerufene Störsignale am Hydrophon vermieden werden.

Dadurch, daß die hülsenförmigen und/oder die ringförmigen Dichtungen aus offenzelligem, vorzugsweise elastischem Material, insbesondere PU-Schaum (Polyurethan), gebildet sind, so daß in Längsrichtung des Streamers Durchgangskanäle mit verringertem Öffnungsquerschnitt verbleiben, wird das Hydrophon vom als Halterung dienenden Formstück akustisch entkoppelt. Die beim Schleppen des Streamers durchs Wasser entstehenden Schwingungen werden vom Schlauch bzw. von den über Zugseile verbundenen Formstücken daher nicht auf das Hydrophon übertragen. Bei Verwendung eines PU-Schaums wird vorteilhaft der für marineseismische Untersuchungen verwendete Schallfrequenzbereich wirksam entkoppelt.

Wenn der Elastizitätsmodul des Schlauches derart gewählt ist, daß unter Zugkraft während einer Meßfahrt des Streamers der Innendurchmesser des Schlauches dem äußeren Durchmesser der Formstücke im wesentlichen entspricht, ist der Streamer bei Meßfahrt zwischen Formstück und Schlauch im wesentlichen abdichtend ausgebildet. Um nur eine geringfügige Verkleinerung des Spalts zuzulassen, kann vorgesehen sein, auf der zylindrischen Oberfläche der Formstücke in Längsrichtung des Schlauches verlaufende linienförmige Erhebungen vorzusehen, deren Höhe der Spaltbreite im Ruhezustand des Schlauches entspricht. Bei Belastung drücken sich diese dann in das Material des Schlauches ein und vergrößern die Haltekraft der Formstücke in axialer Richtung bereits dann, wenn noch ein Spalt vorhanden ist. Bei Verwendung eines Formstücks mit einer Durchgangsbohrung, in die ein Hydrophon mit vorzugsweise aus PU-Schaum hergestellter hülsenförmiger Dichtung eingesetzt ist, kann die Streamerflüssigkeit während der Meßfahrt strömungsdämpfend durch diese Dichtung fließen. Vorteilhaft ist, daß im Ruhezustand ein freier Ringspalt zwischen Formstück und Schlauch verbleiben kann, so daß das Befüllen, Entleeren oder der Ölwechsel am Streamer in gewohnter Schnelligkeit ausgeführt werden kann.

In anderer Ausgestaltung ist es möglich, daß die Formstücke selbst aus offenzelligem, festem Material, vorzugsweise Polypropylen oder Polyamid, gebildet sind. Damit ist eine gedämpfte Ausgleichsströmung durch das Formstück selbst möglich. Die zwischen Formstück und Schlauch bzw. Formstück und Hydrophon vorzusehenden Dichtungen brauchen dann nicht mehr durchlässig ausgeführt werden.

Wenn die ringförmigen Dichtungen als O-Ringe oder Lippendichtungen mit Durchgangsöffnungen ausgebildet sind, wobei die Durchgangsöffnungen eine gedämpfte Flüssigkeitsströmung zulassen, können kostengünstige Standarddichtringe verwendet werden. Die anzubringenden Durchgangsöffnungen, beispielsweise kleine Bohrungen, können je nach erforderlicher Dämpfung ausgewählt werden.

Besonders vorteilhaft sind die in den abhängigen Ansprüchen 14 und 15 angegebenen alternativen Anordnungen. Weist jedes Formstück des Streamers Hydrophone und strömungsbehindernde Vorrichtungen auf, so ist eine maximale die Schwingung der Flüssigkeitssäule dämpfende Wirkung erreichbar. Alle Hydrophone sind lagestabil und geschützt angeordnet. Alternativ dazu können im Streamer regelmäßig oder unregelmäßig aufeinanderfolgend Formstücke mit und ohne Dichtungen und Hydrophone angeordnet werden. Die unregelmäßige Anordnung bildet zwischen den mit strömungsbehindernden Vorrichtungen versehenen Formstücken entkoppelte Flüssigkeitssäulen unterschiedlicher Länge, so daß eventuell auftretende Restschwingungen der entkoppelten Flüssigkeitssäulen vorteilhaft unterschiedliche Resonanzfrequenz aufweisen.

Ein bevorzugtes Ausführungsbeispiel der Erfindung wird anhand der Zeichnungen beschrieben. Es zeigen:
- Fig. 1: einen schematischen Streameraufbau und
- Fig. 2: im Detail einen Schnitt durch einen erfindungsgemäßen Streamer.

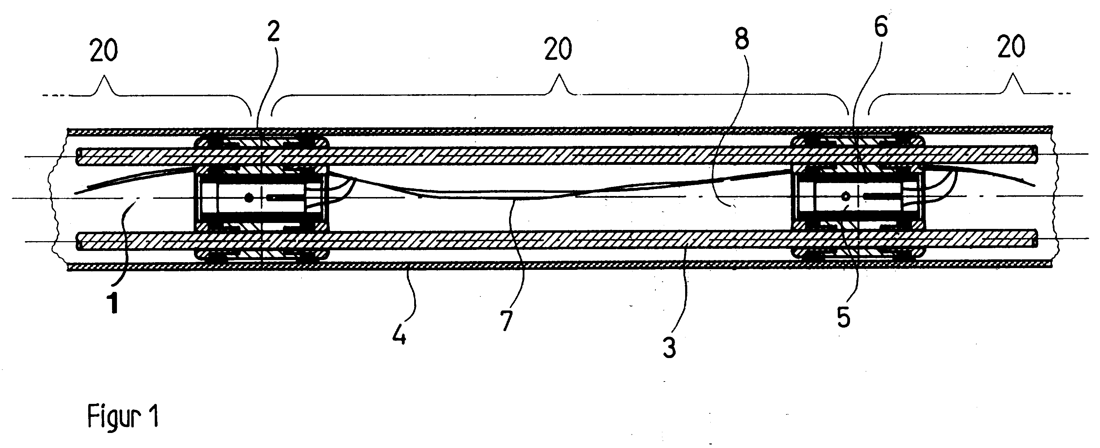

Fig. 1 zeigt im schematischen Schnitt ein marineseismisches Streamerkabel mit einem Skelett 1 aus mehreren Zugseilen 3 und in Längsrichtung beabstandeten Formstücken 2, in denen die Zugseile 3 in geeigneter Weise befestigt sind. Das Skelett 1 nimmt die auf den Streamer wirkenden Zug- und Querkräfte auf. Das Skelett 1 ist von einem Schlauch 4 umhüllt.

In jedem Formstück ist ein Hydrophon 5 in einer axial im Formstück 2 vorgesehenen Durchgangsbohrung 6 angeordnet. Elektrische Leitungen 7 verbinden die Hydrophone 5 mit einer nicht dargestellten Aufzeichnungsapparatur. Die elektrischen Leitungen 7 werden in einer Bohrung im Formstück 2 geführt.

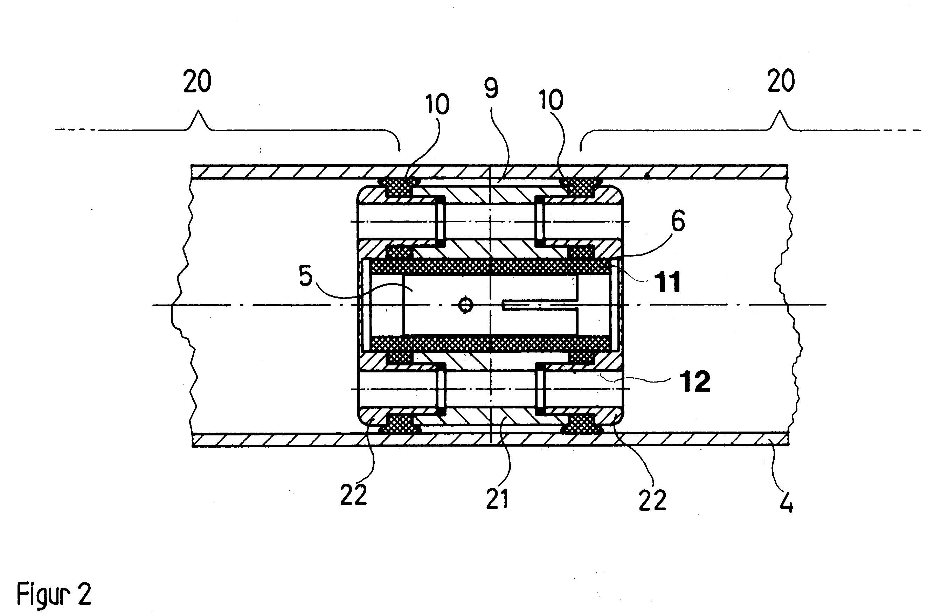

Die Formstücke 2 weisen strömungsbehindernde Vorrichtungen auf, die in Fig. 2 im Detail dargestellt sind. Die Formstücke 2 teilen damit den Streamer in Abschnitte 20, die eine längsgerichtete Flüssigkeitsströmung im Schlauch 4 von einem Abschnitt 20 zu einem benachbarten Abschnitt 20 dämpfen.

Fig. 2 zeigt den Aufbau der strömungsbehindemden Vorrichtung im Detail. Dargestellt ist ein Ausschnitt des Streamerschlauches 4, in dem ein Formstück 2 mit strömungsbehindernden Vorrichtungen angeordnet ist. Das Formstück 2 besteht aus einem zylinderförmigen Mittelteil 21 mit an den Stirnflächen des Mittelteils 21 befestigten identischen Kopfteilen 22. Das Formstück 2 weist eine axial angeordnete Durchgangsbohrung 6 großen Durchmessers auf, in die ein Hydrophon 5 mit einer hülsenförmigen Dichtung 11 eingesetzt ist. Der Außendurchmesser des zylinderförmigen Formstücks 2 ist geringer als der Innendurchmesser des Schlauches 4, so daß sich ein Ringspalt 9 zwischen Formstück 2 und Schlauch 4 ergibt. In dem Ringspalt 9 befinden sich zwei axial beabstandet voneinander angeordnete ringförmige Dichtungen 10, die jeweils zwischen Mittelteil 21 und Kopfteil 22 des Formstücks 2 und des Schlauches 4 eingeklemmt sind. Dabei sind die Kopfteile 22 mit Schrauben an dem Mittelteil 21 befestigt. Zwischen Mittelteil 21 und Kopfteilen 22 angeordnete Stehbolzen erlauben, daß die ringförmigen Dichtungen 10 wirksam zwischen dem Mitteilteil 21 und den Kopfteilen 22 geklemmt, aber nicht übermäßig gepreßt oder gestaucht werden. Die ringförmigen Dichtungen 10 weisen einen Außendurchmesser auf, der im wesentlichen dem Innendurchmesser des Schlauches 4 entspricht.

Im Außenbereich des Formstücks 2 sind achsparallele Bohrungen 12 in gleichmäßiger Kreisteilung entsprechend der Anzahl der im Streamer verwendeten Zugseile 3 vorgesehen. In den Bohrungen 12 sind die Zugseile 3 in geeigneter Weise befestigt.

Die ringförmigen Dichtungen 10 und die hülsenförmige Dichtung 11 bestehen aus offenzelligem PU-Schaum. Die Dichtungen 10 und 11 wirken damit strömungsbehindernd, erlauben jedoch gedämpfte Ausgleichsströmungen der Flüssigkeitsfüllung 8.

Damit bilden die Formstücke mit den strömungsbehindernden Vorrichtungen einen Tiefpassfilter, der langsame Strömungsbewegungen zuläßt, jedoch höherfrequente und damit die seismische Nutzenergie störende Signale dämpft.

Ein Befüllen, Entleeren oder Wechseln der Flüssigkeitsfüllung 8 des erfindungsgemäßen Streamers ist weiterhin möglich. Zur Beschleunigung dieser Vorgänge kann der Druck der Flüssigkeitsfüllung erhöht werden, so daß sich der Schlauch 4 aufbläht und einen vergrößerten Ringspalt zwischen ringförmiger Dichtung 10 und Schlauch 4 bildet, so daß die Dichtungen von dem Schlauch freiliegen.

## Patentansprüche

1. Marineseismischer Streamer mit einem flüssigkeitsbefüllten Schlauch (4), in dem in Längsrichtung Zugseile (3) und untereinander in Längsrichtung beabstandete Formstücke (2) zur abschnittsweisen Teilung des Streamers und Hydrophone (5) angeordnet sind, wobei die Formstücke (2) zylindrisch mit einem Außendurchmesser kleiner als der Innendurchmesser des Schlauches (4) ausgebildet sind, so daß sich ein Ringspalt (9) zwischen dem Schlauch (4) und dem Formstück (2) bildet, dadurch gekennzeichnet, daß die Formstücke (2) strömungsbehindernde Vorrichtungen (10, 11) mit wenigstens einer ringförmigen Dichtung (10) aufweisen, wobei der äußere Durchmesser der ringförmigen Dichtung (10) dem Innendurchmesser des Schlauches (4) entspricht, und daß die strömungsbehindernden Vorrichtungen teildurchlässig ausgebildet sind.

2. Marineseismischer Streamer nach Anspruch 1, dadurch gekennzeichnet, daß die Formstücke (2) dreiteilig aus einem Mittelteil (21) und zwei im wesentlichen identischen Kopfteilen (22) gebildet sind, und daß wenigstens zwei in axialer Richtung beabstandete ringförmige Dichtungen (10) zwischen dem Mittelteil (21) und den Kopfteilen (22) angeordnet sind.

3. Marineseismischer Streamer nach Anspruch 1, dadurch gekennzeichnet, daß die Formstücke (2) zweiteilig aus zwei im wesentlichen identischen Kopfteilen (22) gebildet sind und daß die ringförmige Dichtung (10) zwischen den beiden Kopfteilen angeordnet ist.

4. Marineseismischer Streamer nach Anspruch 2 oder 3, dadurch gekennzeichnet, daß die ringförmigen Dichtungen (10) in äußeren Ringnuten am Formstück (2) oder zwischen den Formstückteilen angeordnet sind.

5. Marineseismischer Streamer nach Anspruch 1, 2, 3 oder 4, dadurch gekennzeichnet, daß die zylindrische Oberfläche der Formstücke (2) in Längsrichtung des Schlauches verlaufende linienartige Erhebungen aufweist.

6. Marineseismischer Streamer nach Anspruch 5, dadurch gekennzeichnet, daß die Erhebungen eine Höhe entsprechend der Spaltbreite zwischen Formstück und Schlauchinnenwand aufweisen.

7. Marineseismischer Streamer nach einem der vorhergehenden Ansprüche, dadurch gekennzeichnet, daß im Inneren wenigstens eines der Formstücke ein Hydrophon (5) angeordnet ist.

8. Marineseismischer Streamer nach Anspruch 7, dadurch gekennzeichnet, daß das Hydrophon (5) in einer in Längsrichtung angeordneten Durchgangsbohrung (6) des Formstücks (2) eingesetzt ist.

9. Marineseismischer Streamer nach Anspruch 8, dadurch gekennzeichnet, daß das Hydrophon in einem in die Durchgangsbohrung eingesetzten Rohrabschnitt eingesetzt ist, der in einer hülsenförmigen Dichtung verankert ist.

10. Marineseismischer Streamer nach einem der Ansprüche 1 - 9, dadurch gekennzeichnet, daß die hülsenförmigen und/oder die ringförmigen Dichtungen (10, 11) aus offenzelligem, vorzugsweise elastischem Material, insbesondere PU-Schaum, gebildet sind, so daß in Längsrichtung des Streamers Durchgangskanäle mit verringertem Öffnungsquerschnitt verbleiben.

11. Marineseismischer Streamer nach einem der vorhergehenden Ansprüche, dadurch gekennzeichnet, daß der Elastizitätsmodul des Schlauches (4) derart gewählt ist, daß unter Zugkraft während einer Meßfahrt des Streamers der Innendurchmesser des Schlauches (4) dem äußeren Durchmesser der Fomstücke (2) im wesentlichen entspricht.

12. Marineseismischer Streamer nach einem der Ansprüche 1 - 11, dadurch gekennzeichnet, daß die Formstücke (2) aus offenzelligem, festem Material, vorzugsweise Polypropylen oder Polyamid, gebildet sind.

13. Marineseismischer Streamer nach einem der Ansprüche 1 - 4, dadurch gekennzeichnet, daß die ringförmigen Dichtungen (10) als O-Ringe oder Lippendichtungen mit Durchgangsöffnungen ausgebildet sind, wobei die Durchgangsöffnungen eine gedämpfte Flüssigkeitsströmung zulassen.

14. Marineseismischer Streamer nach einem der vorhergehenden Ansprüche, dadurch gekennzeichnet, daß jedes Formstück (2) des Streamers Hydrophone (5) und strömungsbehindernde Vorrichtung aufweisen.

15. Marineseismischer Streamer nach einem der Ansprüche 1 - 13, dadurch gekennzeichnet, daß im Streamer regelmäßig oder unregelmäßig aufeinanderfolgend Formstücke (2) mit und ohne Dichtungen und Hydrophone (5) angeordnet sind.

## Claims

1. Marine-seismic streamer having a liquid-filled tube (4), in which there are arranged, in the longitudinal direction, hauling cables (3) and shaped pieces (2) which are spaced apart in the longitudinal direction for dividing the streamer into sections, and hydrophones (5), the shaped pieces (2) being of cylindrical construction with an outside diameter smaller than the inside diameter of the tube (4), such that an annular gap (9) is formed between the tube (4) and the shaped piece (2), characterized in that the shaped pieces (2) have flow-obstructing devices (10, 11) having at least one annular seal (10), the outer diameter of the annular seal (10) corresponding to the inside diameter of the tube (4), and in that the flow-obstructing devices are constructed to be partially permeable.

2. Marine-seismic streamer according to Claim 1, characterized in that the shaped piece (2) is formed in three parts from a central part (21) and two substantially identical head parts (22), and in that at least two annular seals (10), spaced apart in the axial direction, are arranged between the central part (21) and the head parts (22).

3. Marine-seismic streamer according to Claim 1, characterized in that the shaped pieces (2) are formed in two parts from two substantially identical head parts (22), and in that the annular seal (10) is arranged between the two head parts.

4. Marine-seismic streamer according to Claim 2 or 3, characterized in that the annular seals (10) are arranged in outer annular grooves on the shaped piece (2) or between the shaped piece parts.

5. Marine-seismic streamer according to any of Claims 1, 2, 3 or 4, characterized in that the cylindrical surface of the shaped pieces (2) has linear elevations running in the longitudinal direction of the tube.

6. Marine-seismic streamer according to Claim 5, characterized in that the elevations have a height corresponding to the width of the gap between the shaped piece and the inside wall of the tube.

7. Marine-seismic streamer according to any of the preceding claims, characterized in that a hydrophone (5) is arranged inside at least one of the shaped pieces.

8. Marine-seismic streamer according to Claim 7, characterized in that the hydrophone (5) is inserted in a through-bore (6) of the shaped piece (2) arranged in the longitudinal direction.

9. Marine-seismic streamer according to Claim 8, characterized in that the hydrophone is inserted in a tube section which is inserted in the through-bore and is anchored in a sleeve-type seal.

10. Marine-seismic streamer according to any of Claims 1-9, characterized in that the sleeve-type and/or the annular seals (10, 11) are formed from open-cell, preferably elastic, material, in particular PU-foam, such that through-channels of reduced opening cross-section remain in the longitudinal direction of the streamer.

11. Marine-seismic streamer according to any of the preceding claims, characterized in that the modulus of elasticity of the tube (4) is selected to be such that, under tensile force during a measuring run of the streamer, the inside diameter of the tube (4) substantially corresponds to the outer diameter of the shaped pieces (2).

12. Marine-seismic streamer according to any of Claims 1-11, characterized in that the shaped pieces (2) are formed from open-cell, solid material, preferably polypropylene or polyamide.

13. Marine-seismic streamer according to any of Claims 1-4, characterized in that the annular seals (10) are constructed as O-rings or lip seals with through-openings, the through-openings allowing a damped liquid flow.

14. Marine-seismic streamer according to any of the preceding claims, characterized in that each shaped piece (2) of the streamer has hydrophones (5) and flow-obstructing devices.

15. Marine-seismic streamer according to any of Claims 1-13, characterized in that hydrophones (5) and shaped pieces (2), following on from one another in a regular or irregular manner, with and without seals are arranged in the streamer.

## Revendications

1. Flûte sismique marine comprenant un tuyau (4) rempli de liquide, dans lequel sont disposés des câbles de traction (3), dans le sens longitudinal, des éléments profilés (2) espacés les uns des autres dans le sens longitudinal et destinés à diviser la flûte en sections, et des hydrophones (5), étant précisé que les éléments profilés (2) ont une forme cylindrique avec un diamètre extérieur inférieur au diamètre intérieur du tuyau (4), ce qui définit un interstice annulaire (9) entre le tuyau (4) et l'élément profilé (2), caractérisée en ce que les éléments profilés (2) comportent des dispositifs gênant l'écoulement (10, 11) formés d'au moins un joint d'étanchéité annulaire (10), le diamètre extérieur du joint d'étanchéité annulaire (10) correspondant au diamètre intérieur du tuyau (4), et en ce que les dispositifs gênant l'écoulement sont en partie perméables.

2. Flûte sismique marine selon la revendication 1, caractérisée en ce que les éléments profilés (2) sont en trois parties et se composent d'un élément centrai (21) et de deux éléments de tête (22) globalement identiques, et en ce qu'au moins deux joints d'étanchéité annulaires (10) espacés dans le sens axial sont disposés entre l'élément central (21) et les éléments de tête (22).

3. Flûte sismique marine selon la revendication 1, caractérisée en ce que les éléments profilés (2) sont en deux parties et se composent de deux éléments de tête (22) globalement identiques, et en ce que le joint d'étanchéité annulaire (10) est disposé entre les deux éléments de tête.

4. Flûte sismique marine selon la revendication 2 ou 3, caractérisée en ce que les joints d'étanchéité (10) sont disposés dans des rainures annulaires extérieures prévues sur l'élément profilé (2), ou entre les parties de l'élément profilé.

5. Flûte sismique marine selon les revendications 1, 2, 3 ou 4, caractérisée en ce que la surface cylindrique des éléments profilés (2) présente des bossages linéaires qui s'étendent dans le sens longitudinal du tuyau.

6. Flûte sismique marine selon la revendication 5, caractérisée en ce que les bossages ont une hauteur qui correspond à la largeur de l'interstice entre l'élément profilé et la paroi intérieure du tuyau.

7. Flûte sismique marine selon l'une des revendications précédentes, caractérisée en ce qu'un hydrophone (5) est disposé à l'intérieur de l'un au moins des éléments profilés.

8. Flûte sismique marine selon la revendication 7, caractérisée en ce que l'hydrophone (5) est placé dans un perçage de passage (6) de l'élément profilé (2) qui est disposé dans le sens longitudinal.

9. Flûte sismique marine selon la revendication 8, caractérisée en ce que l'hydrophone est placé dans une section tubulaire qui est prévue dans le perçage de passage et qui est fixée dans un joint d'étanchéité en forme de manchon.

10. Flûte sismique marine selon l'une des revendications 1 à 9, caractérisée en ce que les joints d'étanchéité en forme de manchon et/ou annulaires (10, 11) se composent d'un matériau de préférence élastique à cellules ouvertes, en particulier de la mousse en PU, de sorte qu'il reste dans le sens longitudinal de la flûte des conduits de passage à section d'ouverture réduite.

11. Flûte sismique marine selon l'une des revendications précédentes, caractérisée en ce que le module d'élasticité du tuyau (4) est choisi pour que, en présence d'une force de traction exercée lors d'un trajet de mesure de la flûte, le diamètre intérieur du tuyau (4) corresponde globalement au diamètre extérieur des éléments profilés (2).

12. Flûte sismique marine selon l'une des revendications 1 à 11, caractérisée en ce que les éléments profilés (2) se composent d'un matériau solide à cellules ouvertes, de préférence du polypropylène ou du polyamide.

13. Flûte sismique marine selon l'une des revendications 1 à 4, caractérisée en ce que les joints d'étanchéité annulaires (10) sont conçus comme des anneaux toriques ou des joints à lèvres pourvus d'ouvertures de passage, les ouvertures de passage autorisant un écoulement de liquide atténué.

14. Flûte sismique marine selon l'une des revendications précédentes, caractérisée en ce que chaque élément profilé (2) de la flûte comporte des hydrophones (5) et un dispositif gênant l'écoulement.

15. Flûte sismique marine selon l'une des revendications 1 à 13, caractérisée en ce qu'on dispose dans la flûte des éléments profilés (2) qui se succèdent régulièrement ou irrégulièrement, avec et sans joints d'étanchéité, et des hydrophones (5).
